# EUROPEAN PATENT SPECIFICATION

(11) **EP 4 584 188 B1**
(45) Date of publication and mention of the grant of the patent: **23.09.2026**
(21) Application number: 23764908.2
(22) Date of filing: 04.09.2023
(51) Int. Cl.: B65G 45/12, B65G 45/16

(54) **CONVEYOR BELT SCRAPER BLADE AND A METHOD FOR MANUFACTURING THE SAME**
FÖRDERBANDABSTREIFBLATT UND VERFAHREN ZUR HERSTELLUNG DAVON
LAME DE RACLOIR DE BANDE TRANSPORTEUSE ET SON PROCÉDÉ DE FABRICATION

(30) Priority: 09.09.2022 SE 2251045
(43) Date of publication of application: 16.07.2025
(73) Proprietor: Metso Finland Oy, 02230 Espoo (FI)
(72) Inventor: ROLFSSON, Hans Jerker, 231 53 Trelleborg (SE); PERSSON, Lars Mathias, 231 32 Trelleborg (SE)
(74) Representative: AWA Sweden AB
(86) International application number: PCT/EP2023/074123
(87) International publication number: WO 2024/052254

(56) References cited:
- EP-A1- 0 573 688
- EP-A1- 0 634 347
- DE-U1- 20 318 782
- DE-U1- 9 403 860
- US-A- 4 533 036
- US-A- 5 944 167
- US-A1- 2009 218 196
- US-B1- 6 279 727

## Description

### Field of invention

The present disclosure relates to a conveyor belt scraper blade and a method for manufacturing a conveyor belt scraper blade.

### Technical background

Scraper blades for conveyor belts are used for cleaning the conveyor belt from material that gets stuck and therefore remains on the conveyor belt after the conveyed material leaves the same. One example of such a scraper blade, according to the preamble of claim 1, is disclosed in US 4 533 036 A which describes a scraper having scraper blades integrated with blade supports. Each scraper blade is molded integrally with its blade mount and blade support. To stiffen each blade, a rigid insert may be incorporated in the blade. There are many parameters that are important for the functionality of the scraper blade. The scraper blade needs to have a stable construction to keep its shape during the stress exerted thereon during use. It also needs to have good wear characteristics to reduce downtime due to scraper replacement. If the scraper blade needs to be replaced too often it is a problem both economically and for the environment, due to a waste of resources. When a scraper blade for a conveyor belt is in operation, it will gradually wear as a result from the frictional forces exerted thereon from the movable conveyor belt. At the end of the service life of the scraper blade, a large portion of the scraper blade will have been removed by wear, whereby it will be time to replace the scraper blades to maintain required conveyor belt cleaning. After replacement, what remains left of the old scraper blade must be disposed of. A problem with the scraper blades of the art is that, once at the end of their service life, their remaining parts makes up considerable amount of waste. There is thus a need in the art for an improved scraper blade which reduces the amount of waste material during replacement.

### Summary

It is an object to mitigate, alleviate or eliminate one or more of the above-identified deficiencies in the art and disadvantages singly or in any combination. These and other objects are at least partly met by the invention as defined in the independent claims. Preferred embodiments are set out in the dependent claims.

According to a first aspect there is provided a conveyor belt scraper blade according to claim 1 having an extension along a scraper axis and configured to scrape off material from a conveyor belt surface along a scraping region extending in parallel with the scraper axis,
the conveyor belt scraper blade comprising:
a supporting shell structure presenting a scraper tip at a first end and a mounting base at a second, opposite, end and being tapered towards the scraper tip at least at the first end, and
one or more scraper elements arranged within the supporting shell structure so as to at least partially fill an interior thereof at the first end,
wherein the conveyor belt scraper blade is structured and arranged to wear off during use and the one or more scraper elements are arranged with respect to the supporting shell structure such that the one or more scraper elements, at the end of a service life of the conveyor belt scraper blade, is fully or partially worn off,
wherein the supporting shell structure is made of a first material and the one or more scraper elements are made of a second material, and wherein the first and second materials are different.

The conveyor belt scraper blade may be advantageous since its supporting shell structure allows selecting which parts of the supporting shell structure that may be filled with scraper elements. By selectively filling the parts of the supporting shell structure that will be worn off until the end of the service life of the conveyor belt scraper blade, the total required volume of material needed to manufacture a conveyor belt scraper blade will decrease and a bigger portion of the conveyor belt scraper blade can be used before remaining parts thereof is disposed of as waste. The use of two different materials also allows selecting the material characteristics independently from each other. This may allow a supporting shell structure having one preferred characteristic to contribute with one function of the conveyor belt scraper blade, and the scraper elements having other characteristics to contribute with another function.

The supporting shell structure should be construed as an outer layer having a finite thickness. Thus, the supporting shell structure will be hollow. One purpose of the supporting shell structure is to define the shape of the conveyor belt scraper blade and support the one or more scraper elements. Another purpose of the supporting shell structure is to provide structural integrity to the conveyor belt scraper blade. An advantage of the shell structure is that it allows minimizing the amount of material for holding the structural shape of the conveyor belt scraper blade. This may allow minimizing both the amount of material used for the supporting shell structure and the amount of material used for the one or more scraper elements. As a result of this, the conveyor belt scraper blade may have a smaller environmental footprint and be more economically beneficial.

During use, the conveyor belt scraper blade will be subject to wear at the contact point between the scraper blade and the conveyor belt. The wear will occur at the position of the scraper which contacts the conveyor belt. A newly replaced conveyor belt scraper blade will therefore first be subject to wear of the supporting shell structure until this outer shell layer has worn off and the conveyor belt surface reaches a scraper element of the scraper. Thus, the supporting shell structure can be subject to wear both alone and together with the scraper element. At the end of the service life of the conveyor belt scraper blade, the one or more scraper elements are fully or partially worn off. Thus, when replacing the conveyor belt scraper blade, the waste material will predominately, or only, comprise the remaining parts of the supporting shell structure. Since the remaining parts of the supporting shell structure is not intended to perform any scraping, the remaining parts of the supporting shell structure may be structured and arranged to provide structural integrity only, which allows for a design with a reduced amount of material compared to the scrapers of the art.

The conveyor belt scraper blade is intended to be positioned in relation to a conveyor belt such that its upper end will be in contact with the conveyor belt along a scraping region. The scraping region extends in parallel with the extension of the conveyor belt scraper blade. The scraping region also extends generally in parallel with a rotational axis of the conveyor belt. This implies that the scraping region extends generally transverse to a traveling direction of the conveyor belt. Typically, a plurality of conveyor belt scraper blades is arranged mutually adjacent to each other to form a common conveyor belt scraper structure long enough to scrape parts of, or the entire width of the conveyor belt.

As readily appreciated by the person skilled in the art, the active parts of the conveyor belt scraper blade which are in abutment with the conveyor belt will gradually move as the conveyor belt scraper blade wears down during use. However, as used herein, the terms "scraper tip", "first end", etc. will always refer to an unworn, or unused, conveyor belt scraper blade.

According to some embodiments, the supporting shell structure completely encloses the one or more scraper elements in directions being transverse to the scraper axis. This implies that the supporting shell structure completely encloses the one or more scraper elements in a plane being transverse to the scraper axis. Thus, the one or more scraper elements will be completely enclosed in the two dimensions of three-dimensional space which is transverse to the scraper axis.

The directions being transverse to the scraper axis include a first direction extending from the first end to the second end of the supporting shell structure and a second direction that extend generally along the moving direction of the conveyor belt at the connection point between the conveyor belt scraper blade. The supporting shell structure will enclose the one or more scraper elements from each side in the first direction and from each side in the second direction.

With the supporting shell structure completely enclosing the one or more scraper elements in two directions the conveyor belt scraper blade may be stable throughout its service life. There will always be some parts of the supporting shell structure left to keep the structural shape of the conveyor belt scraper blade. This may ensure that the conveyor belt scraper blade can be in close contact with conveyor belt throughout its service life.

It is stressed that this does not imply that the supporting shell structure completely encloses the one or more scraper elements in all three dimensions. The supporting shell structure may be structured to not enclose the one or more scraper elements along the scraper axis.

According to some embodiments, the supporting shell structure has a constant cross-sectional profile along the scraper axis.

According to some embodiments, the supporting shell structure is manufactured by an extrusion process, an injection moulding process, or a 3D printing process.

The extrusion process is a reliable process for providing the product with the constant cross-sectional profile of the supporting shell structure. It allows manufacturing elements with relatively complex shapes, also having hollow spaces. Also, it allows manufacturing elements with a relatively long length. This may allow manufacturing long conveyor belt scraper blades to allow covering the entire scraping width with a single scraper blade. The injection moulding process is also regarded as a reliable process for manufacturing the supporting shell structure. It is a versatile technique and allows manufacturing very complex shapes. Specifically, it may allow manufacturing supporting shell structures having a varying cross-sectional profile along the scraper axis. The 3D-printing process is also regarded as a reliable process for manufacturing the supporting shell structure. Although manufacturing time may be less fast, it allows manufacturing very complex shapes. Moreover, modifications in the design are more easily implemented, as dedicated elements such the tailored moulds used in the extrusion and injection moulding processes do not have to be designed and fabricated.

According to some embodiments, the second material comprises a polymer.

According to some embodiments, the second material comprises polyurethane or a thermoplastic elastomer.

Polyurethane may provide low friction, high wear resistance, and high strength. Another advantage is that polyurethane-based scraper elements may be formed by moulding. The second material may be a polyurethane composite material. Thermoplastic elastomers (TPE) show advantages typical of both rubbery materials and plastic materials. The benefit of using thermoplastic elastomers may be the ability to stretch to moderate elongations and return to its near original shape creating a longer life and better physical range than many other materials. Another advantage of thermoplastic elastomers may be that, while most elastomers are thermosets, thermoplastic elastomers are in contrast relatively easy to use in manufacturing, for example, by injection moulding and extrusion processes. The thermoplastic elastomer may be thermoplastic polyurethane (TPU). Thermoplastic elastomers include at least: styrenic block copolymers, TPS (TPE-s), thermoplastic polyolefinelastomers, TPO (TPE-o), thermoplastic Vulcanizates, TPV (TPE-v or TPV), thermoplastic polyurethanes, TPU (TPU), thermoplastic copolyester, and TPC (TPE-E), and thermoplastic polyamides, TPA (TPE-A). Examples of TPE materials that come from block copolymers group are amongst others CAWITON, THERMOLAST K, THERMOLAST M, Arnitel, Hytrel, Dryflex, Mediprene, Kraton, Pibiflex, Sofprene, and Laprene. Out of these styrenic block copolymers (TPE-s) are CAWITON, THERMOLAST K, THERMOLAST M, Sofprene, Dryflex and Laprene. Laripur, Desmopan or Elastollan are examples of thermoplastic polyurethanes (TPU). Sarlink, Santoprene, Termoton, Solprene, THERMOLAST V, Vegaprene, or Forprene are examples of TPV materials. Examples of thermoplastic olefin elastomers (TPO) compound are For-Tec E or Engage.

The second material could also comprise other kind of materials suitable for scraping the conveyor belt, for example rubber.

It is also conceivable to blend further compounds into the material. As an example, carbide may be suitable for some embodiments of the conveyor belt scraper blade since it is highly wear resistant. In other words, the scraper elements may be made from a material which includes carbide powder. The carbide powder may be mixed with a polymeric material such as polyurethane. It is also conceivable to provide scraper elements which includes other ceramic powders, or graphene powder.

According to some embodiments, the first material is biodegradable and/or biobased. Providing a first material which is biodegradable and/or biobased allows to further reduce the impact on the environment. When the remaining part of a worn-out scraper is replaced, it may be disposed of in a sustainable way. It may for example be shredded into smaller elements and composted. Thus, the provision of these materials may completely remove, or at least reduce, the increase of landfill.

According to some embodiments, the first material has a higher hardness than the second material. The hardness of the material may be measured with a Shore durometer. The second material may have a hardness of 50-95° Shore A and in general more preferably 70° Shore A. When the first material is a harder material than the second material the supporting shell structure can provide the stability needed for the conveyor belt scraper blade to keep its shape during use.

The increased stability of the supporting shell structure may be advantageous because it allows the use of a softer material for the scraper elements, even a material with a hardness that would not keep its shape by itself during usage may be used. The softer material is often more abrasion resistant which increases the lifetime of the conveyor belt scraper blade. An advantage with an increased lifetime is that the need for maintenance of the conveyor belt decreases as the conveyor belt scraper blade does not need to be replaced as often.

According to some embodiments, the first material comprises a polymer.

According to some embodiments, the first material comprises one or more from the list of: a thermoplastic elastomer, polyvinyl chloride, acrylonitrile styrene acrylate and polyethylene.

The first material may be a thermoplastic polymer. One suitable thermoplastic polymer may be acrylonitrile styrene acrylate (ASA), also called acrylic styrene acrylonitrile, which is an amorphous thermoplastic developed as an alternative to acrylonitrile butadiene styrene (ABS). It is an acrylate rubber-modified styrene acrylonitrile copolymer. It has high UV resistance and mechanical properties making it a suitable material for use in an extrusion process.

The first material may comprise a biodegradable thermoplastic elastomer. The first material may be a composition of two or more compounds. The two or more compounds may be selected from the list of thermoplastic elastomers, polyvinyl chloride, or polyethylene, but may alternatively be selected from other compounds.

The first and second materials may each be a respective composition which comprises the same compound. For example, the first and second material may each comprise a specific thermoplastic elastomer or may each comprise polyurethane. The difference between the first and second materials will in this case depend on the composition, where other compounds part of the composition may be different.

Alternatively, or additionally, the first and second materials may comprise different species within the same group of materials. For example, the first material may comprise a first thermoplastic elastomer and the second material may comprise a second, different, thermoplastic elastomer.

According to the invention, the interior of the supporting shell structure comprises a plurality of portions each defining a respective interior volume. The plurality of portions includes one or more scraper portions each of which are filled with a respective one of the one or more scraper elements, and a plurality of hollow portions. The plurality of portions may be advantageous for achieving a specific structure of the conveyor belt scrape blade. For example, there may be an advantage to just fill the portions which will be worn down during use with scraper elements. This would reduce the amount of waste material. Which of the portions that will be filled with scraper elements may be decided depending on the contact inclination between the conveyor belt scraper blade and the conveyor belt. The portions that will be filled may also be decided on the choice of the first and second material. The hollow portions may be advantageous because it further reduces the overall volume of the conveyor belt scraper blade and allows for reducing the volume of the waste when a worn-out conveyor belt scraper blade is disposed of at the end of its service life. Another advantage of the hollow portions may be that it makes the conveyor belt scraper blade easier to handle due to its lighter weight. The plurality of hollow portions are through-openings extending through the supporting structure along the scraper axis. The one or more scraper portions are through-openings extending through the supporting structure along the scraper axis, each of the through-openings being filled with a respective one of the one or more scraper elements.

According to some embodiments, the plurality of hollow portions comprises a first hollow portion which is located within the mounting base. The first hollow portion may be used for mounting the conveyor belt scraper blade. It may also be used for attaching means for mounting the conveyor belt scraper blade.

According to some embodiments, the plurality of hollow portions comprises a second hollow portion which is located between the mounting base and the one or more scraper portions. The second hollow portion contributes to a more efficient use of material.

According to some embodiments, adjacent portions of the plurality of portions are separated from each other by a separating structure which interconnects opposing walls of the supporting shell structure. The opposing walls may be the walls which extends between the scraper tip at the first end and the mounting base at the second end and which extends along the scraper axis. The separating structure may be advantageous for providing an increased stability of the supporting shell structure. It may also further enhance the possibilities for the conveyor belt scraper blade to keep its shape during use. A further advantage with the separating structure may be that it provides a distinct separation of the portions. This makes it easy to manufacture the conveyor belt scraper blade with the desired shape and characteristics. As used herein, the term "separating structure" means any structure which defines a boundary between two adjacent areas/volumes. A separating structure may be an internal wall.

According to a second aspect there is provided a conveyor belt scraper assembly according to claim 12 for scraping off material from a conveyor belt surface. The conveyor belt scraper assembly comprising:
a plurality of conveyor belt scraper blades according to the first aspect, and
a support shaft structured and arranged to support the plurality of conveyor belt scraper blades, and
tensioning means configured to exert a torque or a force onto the support shaft for pressing the plurality of conveyor belt scraper blades towards the conveyor belt surface.

According to a third aspect there is provided a method according to claim 13 of manufacturing a conveyor belt scraper blade, comprising the steps of:
a) manufacturing a supporting shell structure made of a first material having a scraper tip at a first end and a mounting base at a second, opposite, end and being tapered towards the scraper tip at least at the first end, and
b) arranging one or more scraper elements made of a second material within the supporting shell structure so as to at least partially fill an interior thereof at the first end.

According to some embodiments, the step of manufacturing the supporting shell structure is achieved by an extrusion process, an injection moulding process, or a 3D printing process.

According to some embodiments, the step of arranging the one or more scraper elements within the supporting shell structure comprises:
supplying the second material in liquid form into the supporting shell structure so as to at least partially fill an interior thereof at the first end,
whereby the second material binds with the first material of the supporting shell structure to form a coherent structure during cooling.

According to some embodiments of the method, the first and second materials are different.

The supporting shell structure may be manufactured as a whole in a single manufacturing step but may alternatively be manufactured in parts which are later attached to each other in a second step to form the supporting shell structure. As an example, the supporting shell structure may be manufactured by an extrusion process by manufacturing two or more separate sections, which are subsequently attached to each other. This modular manufacturing process may be beneficial for longer conveyor belt scraper blades, where manufacturing using e.g. an extrusion process may become challenging. The modular manufacturing process provides an additional advantage in that it allows providing reinforcement structures within the supporting shell structure which are not extending along the scraper direction prior to mounting the modules together. This would further allow using only a portion of the soon-to-be supporting shell structure as a mould when introducing the second material for the one or more scraper elements. Ones two or more such portions have been filled with second material and the second material has subsequently bonded with the first material to form coherent structures, the portions may be attached to each other to provide a complete conveyor belt scraper blade.

Effects and features of the second and third aspects are largely analogous to those described above in connection with the first aspect. Embodiments mentioned in relation to the first aspect are largely compatible with the second aspect and third aspects. It is further noted that the inventive concepts relate to all possible combinations of features unless explicitly stated otherwise.

A further scope of applicability of the present disclosure will become apparent from the detailed description given below. However, it should be understood that the detailed description and specific examples, while indicating preferred embodiments of the disclosure, are given by way of illustration only, since various changes and modifications within the scope of the disclosure will become apparent to those skilled in the art from this detailed description.

Hence, it is to be understood that this disclosure is not limited to the particular component parts of the device described or steps of the methods described as such device and method may vary. It is also to be understood that the terminology used herein is for purpose of describing particular embodiments only and is not intended to be limiting. It must be noted that, as used in the specification and the appended claim, the articles "a", "an", "the", and "said" are intended to mean that there are one or more of the elements unless the context clearly dictates otherwise. Thus, for example, reference to "a unit" or "the unit" may include several devices, and the like. Furthermore, the words "comprising", "including", "containing" and similar wordings does not exclude other elements or steps.

### Brief description of the Drawings

The disclosure will by way of example be described in more detail with reference to the appended drawings, which shows presently preferred embodiments of the disclosure.
Fig. 1 is a perspective view of a conveyor belt scraper assembly according to an example embodiment of the disclosure.
Fig. 2 is a perspective view of a conveyor belt scraper blade according to an example embodiment of the disclosure.
Fig. 3A is a perspective view of the supporting shell structure of the conveyor belt scraper blade of Fig. 2.
Fig. 3B is a perspective view of the scraper elements of the conveyor belt scraper blade of Fig. 2.
Fig. 4A is a cross-sectional view of the supporting shell structure of the conveyor belt scraper blade of Fig. 2.
Fig. 4B is a cross-sectional view of the scraper elements of the conveyor belt scraper blade of Fig. 2.
Fig. 5A-C are cross-sectional views of alternative example embodiments of the conveyor belt scraper blade of the disclosure.

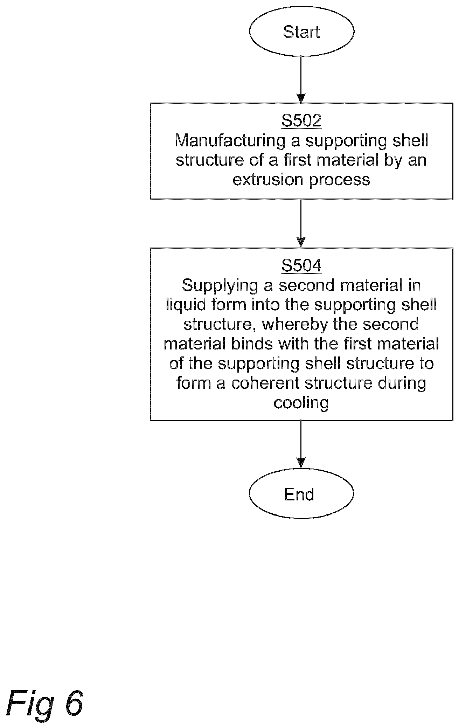

Fig. 6 is a flow chart illustrating the different steps in a method for manufacturing a conveyor belt scraper blade according to the disclosure.

### Detailed description

The present disclosure will now be described more fully hereinafter with reference to the accompanying drawings, in which currently preferred embodiments of the disclosure are shown. This disclosure may, however, be embodied in many different forms and should not be construed as limited to the embodiments set forth herein; rather, these embodiments are provided for thoroughness and completeness, and fully convey the scope of the disclosure to the skilled person.

Conveyor belts are used to transport large volumes of material from one location to another location. In certain applications, for example within the mining industry, conveyor belts are used to transport material such as sand, ore, gravel, coal, minerals, and the like. For such applications, material tend to adhere to the conveyor belt surface which therefore needs to be cleaned.

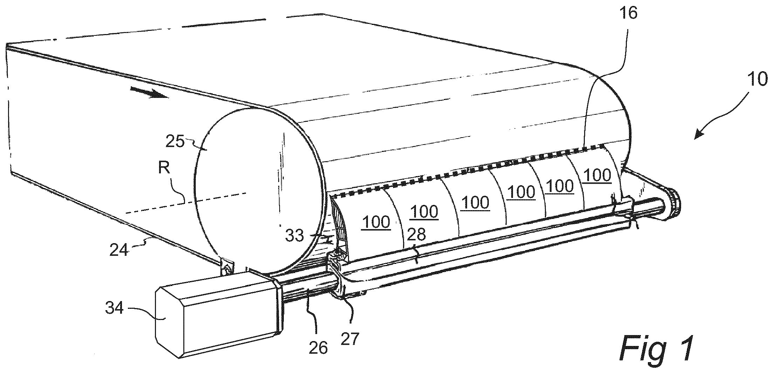

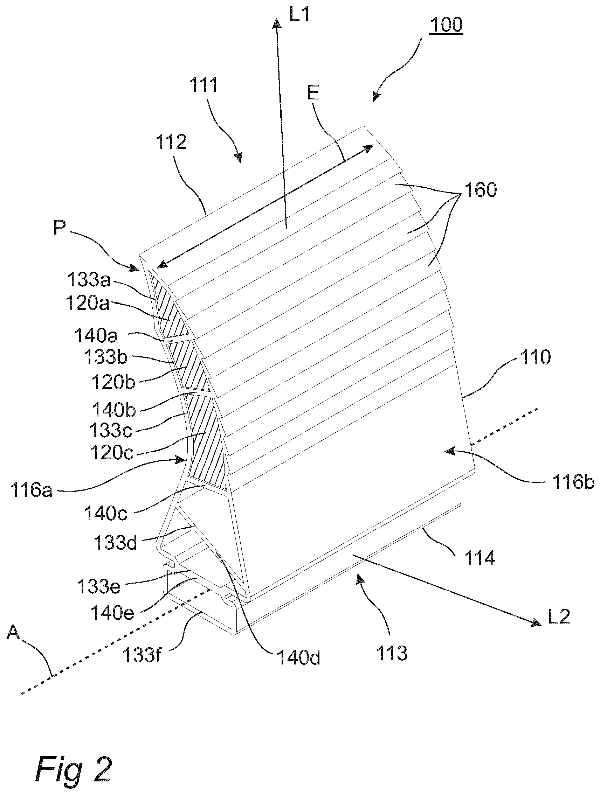

One known solution to keep the conveyor belt clean is to mechanically remove material that gets stuck on the belt surface. An example of a cleaning system of this kind is illustrated in Fig. 1 in the form of a conveyor belt scraper assembly 10. The conveyor belt scraper assembly 10 comprises a plurality of conveyor belt scraper blades 100 arranged mutually adjacent to each other to form a common conveyor belt scraper structure long enough to scrape the entire, or at least a major part of, the width of the conveyor belt surface 24. The conveyor belt scraper assembly 10 comprises a support shaft 26 which is structured and arranged to support a plurality of conveyor belt scraper blades 100. The conveyor belt scraper blades 100 will be more thoroughly described in connection to Fig. 2. The support shaft 26 is configured to press the plurality of conveyor belt scraper blades 100 towards the conveyor belt surface 24 through suitable tensioning means 34. The tensioning means 34 is configured to exert a torque or a force onto the support shaft 26 such that the support shaft 26 presses the conveyor belt scraper blades 100 towards the conveyor belt surface 24. As appreciated by the person skilled in the art, there are many such suitable tensioning means known in the art, based on for example biasing by springs or weights. For the purpose of the present disclosure, the tensioning means 34 has therefore only been conceptually illustrated in Fig. 1. When the conveyor belt surface 24 moves in relation to the conveyor belt scraper blades 100, the scraper blades 100 will scrape the stuck material off from the conveyor belt surface 24. The conveyor belt scraper blades 100 are attached to a mounting element 28 that is rigidly fastened to a square tube 27 which in turn is attached to the supporting shaft 26. The mounting element 28 and the conveyor belt scraper blades 100 mounted thereon can thus easily and quickly be mounted and dismounted as a single unit. The conveyor belt scraper blades 100 are attached to the supporting shaft 26 via a respective mounting base 114 (See e.g. Fig. 2). The mounting base 114 may be shaped in such way that it forms a locking engagement with the supporting shaft 26. The conveyor belt scraper blade 100 is intended to be positioned in relation to a conveyor belt surface 26 such that its upper end 111 will be in contact with the conveyor belt surface 26 along a scraping region 16 (see dotted line in Fig. 1). The scraping region 16 extends in parallel with the extension of the conveyor belt scraper blade 100. The scraping region 16 also extends generally in parallel with a rotational axis R of the conveyor belt pullies 25.

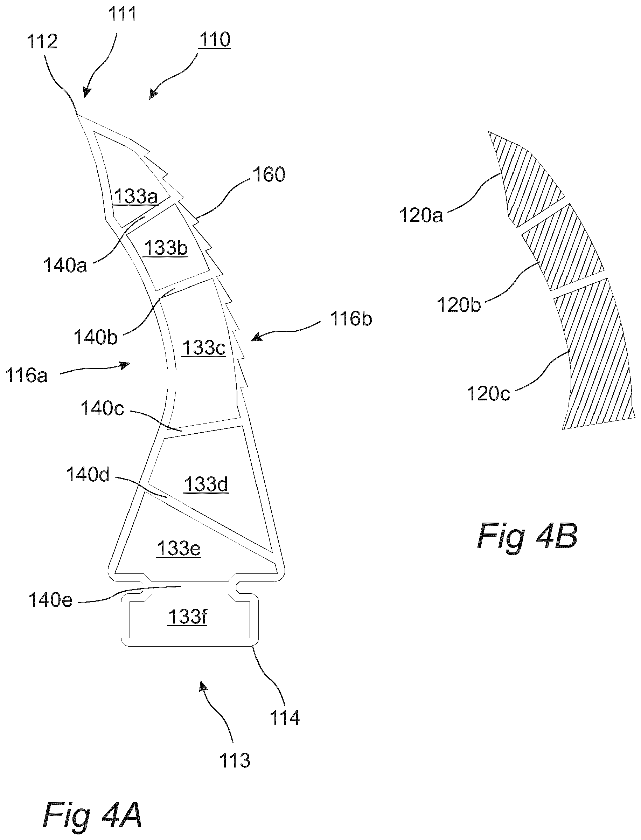

Figs 2, 3A-3B and 4A-B illustrate a conveyor belt scraper blade 100 according to an example embodiment. The conveyer belt scrape blade 100 comprises a supporting shell structure 110 which extends along a scraper axis A and presents a scraper tip 112 at a first end 111 and mounting base 114 at a second 113, opposite, end. The supporting shell structure 110 is tapered towards the scraper tip 112 at least at the first end 112. The supporting shell structure 110 has an outer layer having a finite thickness. Thus, the supporting shell structure 110 will be hollow. One purpose of the supporting shell structure 110 is to define the shape of the conveyor belt scraper blade 100 and support the one or more scraper elements 120a-c.

The supporting shell structure of the conveyor belt scraper blade 100 has a constant cross-sectional profile along the scraper axis A. This opens for certain advantages for manufacturing the conveyor belt scraper blade 100, as will be detailed later.

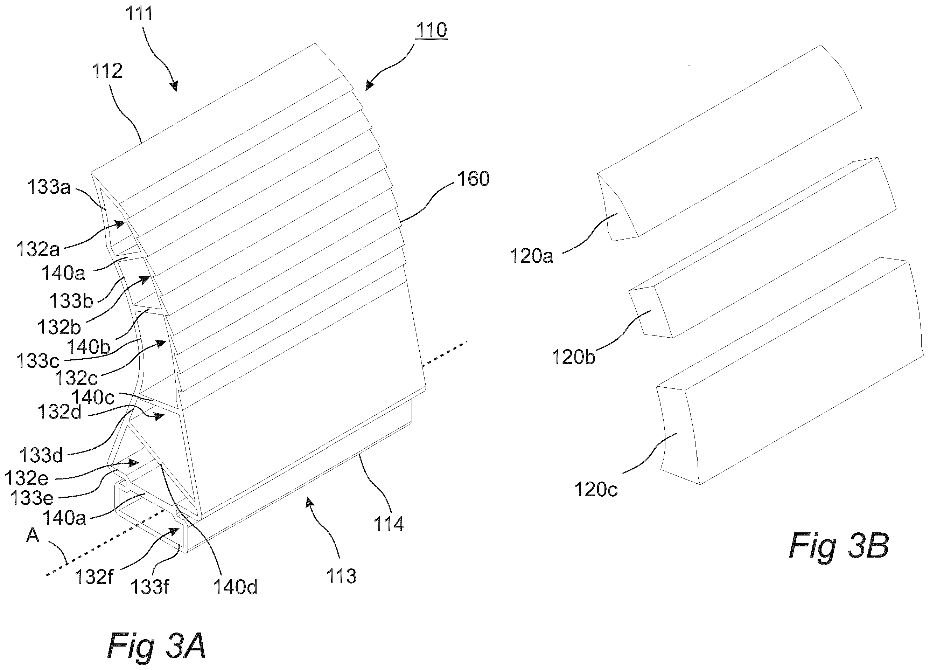

The interior of the supporting shell structure 110 comprises a plurality of portions 133a-f each defining a respective interior volume 132a-f (see Fig. 3A). The plurality of portions 133a-f includes three scraper portions 133a-c and three hollow portions 133d-f. The number of scraper portions 133a-c and the number of hollow portions 133d-f may differ between embodiments. The portions 133a-f are differentiated by whether they are filled with a scraper element 120a-c. If the portion is filled with a scraper element 120a-c it is termed herein as a scraper portion 133a-c. If the portion is empty and does not comprise a scraper element 120a-c, it is termed herein as a hollow portion 133d-f. In the present example embodiment, three different scraper elements 120a, 120b, 120c are used. The plurality of portions 133a-f are separated from each other by separating structures 140a-e which interconnects opposing walls 116a, 116b of the supporting shell structure 110. The separating structures 140a-e may be walls that fully separate the adjacent portions 133a-f from each other. The separating structures 140a-e are connected at each end to one of the opposing walls 116a, 116b. The opposing walls 116a, 116b are for the present example embodiment defined as the walls that extends from the scraper tip 112 to the mounting base 114. In other embodiments the separating structure 140a-e may extend between other walls of the supporting shell structure 110. With the plurality of portions 133a-f, many different designs of the conveyor belt scraper blade are possible. It is also possible to adapt the conveyor belt scraper blade to different conveyor belt scraper assemblies 10. The hollow portions 133d-f decreases the weight of the conveyor belt scraper blade 100 and thus makes it easier to handle. A further advantage with the separating structure 140a-e may be that it provides a distinct separation of the portions. This makes it easy to manufacture the conveyor belt scraper blade with the desired shape and characteristics. The hollow portions 133d-f in Fig. 2 consists of a first hollow portion 133f which is located within the mounting base 114 and two hollow portions 133d, 133e located between the mounting base 114 and the scraper portions 133a-c. To reduce the amount of waste material produced when replacing worn-out conveyor belt scraper blades, preferably only the portions which will be worn down during use is filled with scraper elements 120a-c. Which of the portions that will be worn down may depend on the inclination between the conveyor belt scraper blade 100 and the conveyor belt. Hence, the inclination may be a design parameter when deciding which of the portions 133a-f that should be filled with a scraper elements 120a-c.

The supporting shell structure 110 completely encloses the scraper elements 120a-c in in such way that the three scraper elements 120a-c are completely enclosed in the two dimensions of three-dimensional space which is transverse to the scraper axis A. The three scraper elements 120a-c are however not enclosed in the direction of the scraper axis A. The directions being transverse to the scraper axis include a first direction L1 extending from the second end 113 to the first end 113 of the supporting shell structure 110 and a second direction L2 that extend orthogonal to the first direction and the scraper axis A, i.e. between the two opposing walls 112a, 112b. The supporting shell structure 110 will enclose the one or more scraper elements 120a-c from each side in the first direction L1 and from each side in the second direction L2.

The supporting shell structure 110 may have a plurality of fins 160 at one of the walls that extends from the scraper tip 112 to mounting base 114 so as to provide a stepped, or serrated, surface. Each of the fins 160 extends along the scraper axis and covers the full extension E of the conveyor belt scraper blade 100.

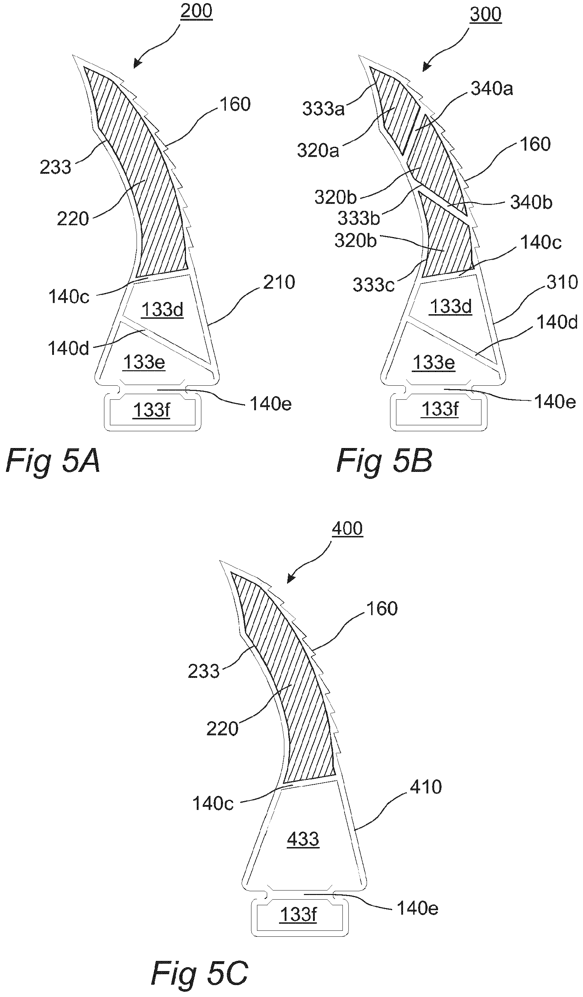

Turning to Fig. 5A-D, four alternative embodiments of the conveyor belt scraper blade are disclosed. As readily appreciated by the person skilled in the art when viewing the figures, each of these alternative embodiments share several features with the conveyor belt scraper blade 100 described hereinabove. To increase clarity, the features which is in common with the first embodiment will be assigned the same reference number, whereas features which are unique to a particular example embodiment will have a higher-order reference number.

Fig. 5A discloses an example embodiment having three separating structures 140c-f and three hollow portions 133d-f but one scraper portion 132. The single scraper portion 233 is filled with a single scraper element 220. As readily appreciated by the person skilled in the art, the volume of the scraper element 220 may be similar to, or equal to, a total volume of the scraper element 120a-c of the conveyor belt scraper blade 100 of Figs 2-4.

Fig. 5B illustrates a conveyor belt scraper blade 300 according to yet another example embodiment. The conveyor belt scraper blade 300 differs from the conveyor belt scraper blade 100 in that the separating structures 340a, 340b are provided at a more acute inclination. Consequently, the geometrical shape of portions 333a-c and the scraper elements 320a-c housed therein will differ from the geometrical shape of portions 133a-c and corresponding scraper elements 120a-c of the conveyor belt scraper blade 100. The inclined separating structures 340a, 340b may be advantageous to enhance structural integrity of the conveyor belt scraper blade 300 for some applications.

Fig. 5C illustrates a conveyor belt scraper blade 400 according to yet another example embodiment. The conveyor belt scraper blade 400 is similar to the conveyor belt scraper blade 200 but differs in that it lacks a separating structure in the lower part of the scraper. Thus, the conveyor belt scraper blade 400 has two separating structures 140c, 140e and two hollow portions 433, 133f and one scraper portion 233.

The material properties of the conveyor belt scraper blade of the disclosure will now be described in detail. This will be done with reference to the first example embodiment, conveyor belt scraper blade 100, but the description is equally valid for other example embodiments described herein, and for other example embodiments falling within the scope of the claims. When designing the conveyor belt scraper blade 100 one important factor is the material. The supporting shell structure 110 is made of a first material and the scraper elements 120 is made of a second material. The first and the second materials are different. The use of two different materials allows selecting the material characteristics independently from each other. This may allow providing a supporting shell structure 110 having one preferred characteristic to contribute with one function of the conveyor belt scraper blade 100, and the scraper elements 120a-c having other characteristics to contribute with another function.

A purpose of the supporting shell structure 110 is to provide structural integrity to the conveyor belt scraper blade 100. An advantage of the supporting shell structure 110 is that it allows minimizing the amount of material for holding the structural shape of the conveyor belt scraper blade 100. This may allow minimizing both the amount of material used for the supporting shell structure 110 and the amount of material used for the one or more scraper elements 120a-c. The first material, from which the supporting shell structure is made, may be biodegradable and/or biobased. Providing a first material which is biodegradable and/or biobased allows to further reduce the impact on the environment. When the remaining part of a worn-out scraper is replaced, it may be disposed of in a sustainable way. It may for example be shredded into smaller elements and composted. Thus, the provision of these materials may completely remove, or at least reduce, the increase of landfill. The first material may comprise one or more from the list of: thermoplastic elastomer, polyvinyl chloride, acrylonitrile styrene acrylate and polyethylene. The first material may be a thermoplastic polymer. One suitable thermoplastic polymer may be acrylonitrile styrene acrylate (ASA), also called acrylic styrene acrylonitrile, which is an amorphous thermoplastic developed as an alternative to acrylonitrile butadiene styrene (ABS). It is an acrylate rubber-modified styrene acrylonitrile copolymer. It has high UV resistance and mechanical properties making it a suitable material for use in an extrusion process.

The first material may comprise a biodegradable material, such as a biodegradable thermoplastic elastomer. The first material may be a composition of two or more compounds. The two or more compounds may be selected from the list of thermoplastic elastomers, polyvinyl chloride, acrylonitrile styrene acrylate (ASA), and polyethylene, but may alternatively be selected from other compounds.

The purpose of the scraping elements 120a-c is to perform a scraping action against the conveyor belt surface 26. Important characteristics for the scraping element 120 may be to be wear-resistant, and flexible for decreasing the risk of the scraper elements 120a-c damaging the conveyor belt surface 24. The second material, of which the scraper elements 120a-c are made, may comprise a polymer such as polyurethane or a thermoplastic elastomer. The second material may alternatively comprise a carbide material, for example in the form of a carbide powder mixed in a further material such as a polymeric material. Polyurethane may provide low friction, high wear resistance, and high strength. Another advantage is that polyurethane-based scraper elements may be formed by moulding. The second material may be a polyurethane composite material. Thermoplastic elastomers (TPE) show advantages typical of both rubbery materials and plastic materials. The benefit of using thermoplastic elastomers may be the ability to stretch to moderate elongations and return to its near original shape creating a longer life and better physical range than many other materials. Another advantage of thermoplastic elastomers is that, while most elastomers are thermosets, thermoplastic elastomers are in contrast relatively easy to use in manufacturing, for example, by injection moulding and extrusion processes. The thermoplastic elastomer may be thermoplastic polyurethane (TPU). Carbide may be suitable for some embodiments of the conveyor belt scraper blade since it is highly wear resistant. The second material could also comprise other kind of materials suitable for scraping the conveyor belt, for example rubber.

The first material may have a higher hardness than the second material. The hardness of the material may be measured with a Shore durometer. The second material may have a hardness of 50-95° Shore A and in general more preferably 70° Shore A. When the first material is a harder material than the second material the supporting shell structure can provide the stability needed for the conveyor belt scraper blade to keep its shape during use.

The supporting shell structure of the conveyor belt scraper blades of the disclosure may be manufactured by an extrusion process. The extrusion process is well known in the art and therefore not described in detail herein. The extrusion process is a reliable process for providing a product having a constant cross-sectional profile. Such a product may be the supporting shell structure and/or the scraper element(s) of the disclosure. With the extrusion process, it may be easy to manufacture the supporting shell structure which makes it beneficial from an economical point of view.

A method of manufacturing a conveyor belt scraper blade will now be described with reference to Fig. 5. The method comprising the steps of:
a) manufacturing S502 a supporting shell structure 110 made of a first material having a scraper tip 112 at a first end 111 and a mounting base 114 at a second 113, opposite, end and being tapered towards the scraper tip 112 at least at the first end 111, and
b) arranging S504 one or more scraper elements 120a-c made of a second material within the supporting shell structure 110 so as to at least partially fill an interior thereof at the first end 111.

The step of manufacturing (S502) the supporting shell structure (110) may be achieved by an extrusion process, an injection moulding process, or a 3D printing process.

The step of arranging the one or more scraper elements 120a-c within the supporting shell structure 110 may comprise:
supplying the second material in liquid form into the supporting shell structure 110 so as to at least partially fill an interior thereof at the first end 111,
whereby the second material binds with the first material of the supporting shell structure 110 to form a coherent structure during cooling.

As previously stated, the first and second materials are different. This does however not rule out that both the first and the second material may comprise the same compound, such as e.g. polyethylene. The first and second materials may each be a respective composition of two or more compounds where one of these two or more compounds is common for both materials

The figures illustrate the conveyor belt scraper blade 100 before being used. The conveyor belt scraper blade 100 is however structured and arranged to wear off during use and the one or more scraper elements 120a-c are arranged with respect to the supporting shell structure 110 such that the one or more scraper elements 120a-c, at the end of a service life of the conveyor belt scraper blade 100, is fully or partially worn off. During use, the conveyor belt scraper blade 100 will be subject to wear at the contact point between the conveyor belt scraper blade 100 and the conveyor belt surface 24. The wear will occur at the position of the conveyor belt scraper blade 100 which contacts the conveyor belt surface 24, i.e. at the scraping region 16. A freshly replaced conveyor belt scraper blade 100 will therefore first be subject to wear of the supporting shell structure 110 until this outer shell layer has worn off and the conveyor belt surface 24 reaches the top scraper element 120a of the conveyor belt scraper blade 100. Thus, the scraper element 120a and the supporting shell structure 110 can be subject to wear both alone and together. Once worn down, the conveyor belt surface 24 reaches the second-to-top scraper element 120b of the conveyor belt scraper blade 100 and starts to wear down that scraper element 120b. At the end of the service life of the conveyor belt scraper blade 100, the one or more scraper elements 120a-c are fully, or partially, worn off. Thus, when replacing the conveyor belt scraper blade 100, the waste material will predominately, or only, comprise the remaining parts of the supporting shell structure 110. Therefore, the appearance of a used conveyor belt scraper blade 100 can be very different from the appearance of the conveyor belt scraper blade in the figures.

The person skilled in the art realizes that the present disclosure by no means is limited to the preferred embodiments described above. On the contrary, many modifications and variations are possible within the scope of the appended claims. Additionally, variations to the disclosed embodiments can be understood and effected by the skilled person in practicing the claimed invention, from a study of the drawings, the disclosure, and the appended claims.

## Claims

1. A conveyor belt scraper blade (100) having an extension along a scraper axis (A) and configured to scrape off material from a conveyor belt surface (24) along a scraping region (16) extending in parallel with said scraper axis (A),
said conveyor belt scraper blade (100) comprising:
a supporting shell structure (110) presenting a scraper tip (112) at a first end (111) and a mounting base (114) at a second (113), opposite, end and being tapered towards the scraper tip (112) at least at the first end (111), and
one or more scraper elements (120a-c) arranged within the supporting shell structure (110) so as to at least partially fill an interior thereof at the first end (111),
wherein the conveyor belt scraper blade (100) is structured and arranged to wear off during use and the one or more scraper elements (120a-c) are arranged with respect to the supporting shell structure (110) such that the one or more scraper elements (120a-c), at the end of a service life of the conveyor belt scraper blade (100), is fully or partially worn off,
wherein the supporting shell structure (110) is made of a first material and the one or more scraper elements (120a-c) are made of a second material, and wherein the first and second materials are different, and
wherein an interior of the supporting shell structure (110) comprises a plurality of portions (133a-f) each defining a respective interior volume (132a-f), said plurality of portions (133a-f) including:
one or more scraper portions (133a-c) each of which being filled with a respective one of the one or more scraper elements (120a-c) and being a respective through-opening which extends through the supporting structure along the scraper axis (A),
**characterised in that** said plurality of portions (133a-f) further include:
a plurality of hollow portions (133d-f), each being a respective through-opening which extends through the supporting structure along the scraper axis (A).

2. The conveyor belt scraper blade (100) according to claim 1, wherein the supporting shell structure (110) completely encloses the one or more scraper elements (120a-c) in directions (L1,L2) being transverse to the scraper axis (A).

3. The conveyor belt scraper blade (100) according to claim 2, wherein the supporting shell structure (110) has a constant cross-sectional profile (P) along the scraper axis (A).

4. The conveyor belt scraper blade (100) according to claim 3, wherein the supporting shell structure (110) is manufactured by an extrusion process, an injection moulding process, or a 3D printing process.

5. The conveyor belt scraper blade (100) according to any one of claims 1 to 4, wherein the second material comprises polyurethane or a thermoplastic elastomer.

6. The conveyor belt scraper blade (100) according to any one of claims 1 to 5, wherein the first material is biodegradable and/or biobased.

7. The conveyor belt scraper blade (100) according to any one of claims 1 to 6, wherein the first material has a higher hardness than the second material.

8. The conveyor belt scraper blade (100) according to any one of claims 1 to 7, wherein the first material comprises one or more from the list of: a thermoplastic elastomer, polyvinyl chloride, acrylonitrile styrene acrylate, and polyethylene.

9. The conveyor belt scraper blade (100) according to claim 8, wherein the plurality of hollow portions (133d-f) comprises a first hollow portion (133f) which is located within the mounting base (114).

10. The conveyor belt scraper blade (100) according to claim 8 or 9, wherein the plurality of hollow portions (133d-f) comprises a second hollow portion (133d,133e) which is located between the mounting base (114) and the one or more scraper portions (132a-c).

11. The conveyor belt scraper blade (100) according to any one of claims 8 to 10, wherein adjacent portions of the plurality of portions (133a-f) are separated from each other by a separating structure (140a-e) which interconnects opposing walls (116a, 116b) of the supporting shell structure (110).

12. A conveyor belt scraper assembly (10) for scraping off material from a conveyor belt surface (24), comprising:
a plurality of conveyor belt scraper blades (100) according to any one of the claims 1 to 11, and
a support shaft (26) structured and arranged to support said plurality of conveyor belt scraper blades (15), and
tensioning means (34) configured to exert a torque or a force onto the support shaft (26) for pressing the plurality of conveyor belt scraper blades (100) towards the conveyor belt surface (24).

13. A method of manufacturing a conveyor belt scraper blade according to claim 1, said method comprising the steps of:
a) manufacturing (S502) a supporting shell structure (110) made of a first material having a scraper tip (112) at a first end (111) and a mounting base (114) at a second (113), opposite, end and being tapered towards the scraper tip (112) at least at the first end (111), and
b) arranging (S504) one or more scraper elements (100) made of a second material within the supporting shell structure (110) so as to at least partially fill an interior thereof at the first end (112).

14. The method according to claim 13, wherein the step of manufacturing (S502) the supporting shell structure (110) is achieved by an extrusion process, an injection moulding process, or a 3D printing process.

15. The method according to claim 13 or 14, wherein the step of arranging (S504) the one or more scraper elements (120a-c) within the supporting shell structure (110) comprises:
supplying the second material in liquid form into the supporting shell structure (110) so as to at least partially fill an interior thereof at the first end (112),
whereby the second material binds with the first material of the supporting shell structure (110) to form a coherent structure during cooling.

## Patentansprüche

1. Förderbandabstreiferklinge (100), die eine Verlängerung entlang einer Abstreiferachse (A) aufweist und dazu ausgelegt ist, Material von einer Förderbandoberfläche (24) entlang eines Abstreifbereichs (16) abzustreifen, der sich parallel zu der Abstreiferachse (A) erstreckt,
die Förderbandabstreiferklinge (100) umfassend:
eine Tragschalenstruktur (110), die eine Abstreiferspitze (112) an einem ersten Ende (111) und eine Montagebasis (114) an einem zweiten (113), diesem gegenüberliegenden Ende aufweist und zumindest an dem ersten Ende (111) zu der Abstreiferspitze (112) hin verjüngt ist, und
ein oder mehrere Abstreiferelemente (120a-c), die innerhalb der Tragschalenstruktur (110) angeordnet sind, um ein Inneres davon an dem ersten Ende (111) zumindest teilweise zu füllen,
wobei die Förderbandabstreiferklinge (100) dazu strukturiert und angeordnet ist, während des Gebrauchs abzuschleifen, und das eine oder die mehreren Abstreiferelemente (120a-c) in Bezug auf die Tragschalenstruktur (110) so angeordnet sind, dass das eine oder die mehreren Abstreiferelemente (120a-c) am Ende einer Lebensdauer der Förderbandabstreiferklinge (100) vollständig oder teilweise abgenutzt sind,
wobei die Tragschalenstruktur (110) aus einem ersten Material besteht und das eine oder die mehreren Abstreiferelemente (120a-c) aus einem zweiten Material bestehen und wobei das erste und das zweite Material unterschiedlich sind, und
wobei ein Inneres der Tragschalenstruktur (110) eine Vielzahl von Abschnitten (133a-f) umfasst, die jeweils ein jeweiliges Innenvolumen (132a-f) definieren, wobei die Vielzahl von Abschnitten (133a-f) einschließt:
einen oder mehrere Abstreiferabschnitte (133a-c), von denen jeder mit einem entsprechenden des einen oder der mehreren Abstreiferelemente (120a-c) gefüllt ist und eine entsprechende Durchgangsöffnung ist, die sich durch die Tragstruktur entlang der Abstreiferachse (A) erstreckt, **dadurch gekennzeichnet, dass** die Vielzahl von Abschnitten (133a-f) ferner einschließt:
eine Vielzahl von hohlen Abschnitten (133d-f), die jeweils eine Durchgangsöffnung sind, die sich durch die Tragstruktur entlang der Abstreiferachse (A) erstreckt.

2. Förderbandabstreiferklinge (100) nach Anspruch 1, wobei die Tragschalenstruktur (110) das eine oder die mehreren Abstreiferelemente (120a-c) in Richtungen (L1, L2) quer zur Abstreiferachse (A) vollständig umschließt.

3. Förderbandabstreiferklinge (100) nach Anspruch 2, wobei die Tragschalenstruktur (110) ein konstantes Querschnittsprofil (P) entlang der Abstreiferachse (A) aufweist.

4. Förderbandabstreiferklinge (100) nach Anspruch 3, wobei die Tragschalenstruktur (110) durch ein Extrusionsverfahren, ein Spritzgussverfahren oder ein 3D-Druckverfahren gefertigt ist.

5. Förderbandabstreiferklinge (100) nach einem der Ansprüche 1 bis 4, wobei das zweite Material Polyurethan oder ein thermoplastisches Elastomer umfasst.

6. Förderbandabstreiferklinge (100) nach einem der Ansprüche 1 bis 5, wobei das erste Material biologisch abbaubar und/oder biobasiert ist.

7. Förderbandabstreiferklinge (100) nach einem der Ansprüche 1 bis 6, wobei das erste Material eine höhere Härte aufweist als das zweite Material.

8. Förderbandabstreiferklinge (100) nach einem der Ansprüche 1 bis 7, wobei das erste Material eines oder mehrere umfasst aus der Liste: thermoplastisches Elastomer, Polyvinylchlorid, Acrylnitril-Styrolacrylat und Polyethylen.

9. Förderbandabstreiferklinge (100) nach Anspruch 8, wobei die Vielzahl von hohlen Abschnitten (133d-f) einen ersten hohlen Abschnitt (133f) umfasst, der sich innerhalb der Montagebasis (114) befindet.

10. Förderbandabstreiferklinge (100) nach Anspruch 8 oder 9, wobei die Vielzahl von hohlen Abschnitten (133d-f) einen zweiten hohlen Abschnitt (133d, 133e) umfasst, der sich zwischen der Montagebasis (114) und dem einen oder den mehreren Abstreiferabschnitten (132a-c) befindet.

11. Förderbandabstreiferklinge (100) nach einem der Ansprüche 8 bis 10, wobei benachbarte Abschnitte der Vielzahl von Abschnitten (133a-f) durch eine Trennstruktur (140a-e) voneinander getrennt sind, die einander gegenüberliegende Wände (116a, 116b) der Tragschalenstruktur (110) miteinander verbindet.

12. Förderbandabstreiferanordnung (10) zum Abstreifen von Material von einer Förderbandoberfläche (24), umfassend:
eine Vielzahl von Förderbandabstreiferklingen (100) nach einem der Ansprüche 1 bis 11, und
eine Stützwelle (26), die dazu strukturiert und angeordnet ist, die Vielzahl von Förderbandabstreiferklingen (15) zu stützen, und Spannmittel (34), die dazu ausgelegt sind, ein Drehmoment oder eine Kraft auf die Stützwelle (26) auszuüben, um die Vielzahl von Förderbandabstreiferklingen (100) in Richtung der Förderbandoberfläche (24) zu drücken.

13. Verfahren zum Fertigen einer Förderbandabstreiferklinge nach Anspruch 1, das Verfahren umfassend die Schritte:
a) Fertigen (S502) einer Tragschalenstruktur (110), gefertigt aus einem ersten Material, die eine Abstreiferspitze (112) an einem ersten Ende (111) und eine Montagebasis (114) an einem zweiten (113), diesem gegenüberliegenden Ende aufweist und zumindest an dem ersten Ende (111) zu der Abstreiferspitze (112) hin verjüngt ist, und
b) Anordnen (S504) eines oder mehrerer Abstreiferelemente (100), die aus einem zweiten Material bestehen, innerhalb der Tragschalenstruktur (110), um ein Inneres davon an dem ersten Ende (112) zumindest teilweise zu füllen.

14. Verfahren nach Anspruch 13, wobei der Schritt des Fertigens (S502) der Tragschalenstruktur (110) durch ein Extrusionsverfahren, ein Spritzgussverfahren oder ein 3D-Druckverfahren erzielt wird.

15. Verfahren nach Anspruch 13 oder 14, wobei der Schritt des Anordnens (S504) des einen oder der mehreren Abstreiferelemente (120a-c) innerhalb der Tragschalenstruktur (110) umfasst:
Zuführen des zweiten Materials in flüssiger Form in die Tragschalenstruktur (110), um ein Inneres davon an dem ersten Ende (112) zumindest teilweise zu füllen,
wobei sich das zweite Material mit dem ersten Material der Tragschalenstruktur (110) verbindet, um während des Abkühlens eine kohärente Struktur auszubilden.

## Revendications

1. Lame de racloir de courroie transporteuse (100) ayant une extension le long d'un axe de racloir (A) et configurée pour éliminer par raclage un matériau à partir d'une surface de courroie transporteuse (24) le long d'une région de raclage (16) s'étendant en parallèle audit axe de racloir (A),
ladite lame de racloir de courroie transporteuse (100) comprenant :
une structure d'enveloppe de support (110) présentant un bout de racloir (112) à une première extrémité (111) et une base de montage (114) à une seconde extrémité opposée (113), et étant effilée vers le bout de racloir (112) au moins à la première extrémité (111), et un ou plusieurs éléments de racloir (120a-c) agencés au-dedans de la structure d'enveloppe de support (110) afin de remplir au moins partiellement un intérieur de celle-ci à la première extrémité (111),
dans laquelle la lame de racloir de courroie transporteuse (100) est structurée et agencée pour s'user durant l'utilisation et l'un ou les plusieurs éléments de racloir (120a-c) sont agencés par rapport à la structure d'enveloppe de support (110) de manière telle que l'un ou les plusieurs éléments de racloir (120a-c), à la fin d'une durée de vie de la lame de racloir de courroie transporteuse (100), sont entièrement ou partiellement usés,
dans laquelle la structure d'enveloppe de support (110) est faite d'un premier matériau et l'un ou les plusieurs éléments de racloir (120a-c) sont faits d'un second matériau, et dans laquelle les premier et second matériaux sont différents, et
dans laquelle un intérieur de la structure d'enveloppe de support (110) comprend une pluralité de parties (133a-f) définissant chacune un volume intérieur respectif (132a-f), ladite pluralité de parties (133a-f) incluant :
une ou plusieurs parties de racloir (133a-c) dont chacune est remplie avec un respectif de l'un ou des plusieurs éléments de racloir (120a-c) et est une ouverture traversante respective qui s'étend à travers la structure le long de l'axe de racloir (A),
**caractérisée en ce que** ladite pluralité de parties (133a-f) incluent en outre :
une pluralité de parties creuses (133d-f), chacune étant une ouverture traversante respective qui s'étend à travers la structure le long de l'axe de racloir (A).

2. Lame de racloir de courroie transporteuse (100) selon la revendication 1, dans laquelle la structure d'enveloppe de support (110) entoure complètement l'un ou les plusieurs éléments de racloir (120a-c) dans des directions (L1, L2) transversales à l'axe de racloir (A).

3. Lame de racloir de courroie transporteuse (100) selon la revendication 2, dans laquelle la structure d'enveloppe de support (110) a un profil de section transversale constant (P) le long de l'axe de racloir (A).

4. Lame de racloir de courroie transporteuse (100) selon la revendication 3, dans laquelle la structure d'enveloppe de support (110) est fabriquée par un processus d'extrusion, un processus de moulage par injection, ou un processus d'impression 3D.

5. Lame de racloir de courroie transporteuse (100) selon l'une quelconque des revendications 1 à 4, dans laquelle le second matériau comprend du polyuréthane ou un élastomère thermoplastique.

6. Lame de racloir de courroie transporteuse (100) selon l'une quelconque des revendications 1 à 5, dans laquelle le premier matériau est biodégradable et/ou biosourcé.

7. Lame de racloir de courroie transporteuse (100) selon l'une quelconque des revendications 1 à 6, dans laquelle le premier matériau a une dureté plus élevée que celle du second matériau.

8. Lame de racloir de courroie transporteuse (100) selon l'une quelconque des revendications 1 à 7, dans laquelle le premier matériau comprend un ou plusieurs parmi la liste suivante : un élastomère thermoplastique, du chlorure de polyvinyle, de l'acrylonitrile-styrène-acrylate, et du polyéthylène.

9. Lame de racloir de courroie transporteuse (100) selon la revendication 8, dans laquelle la pluralité de parties creuses (133d-f) comprend une première partie creuse (133f) qui est située au-dedans de la base de montage (114).

10. Lame de racloir de courroie transporteuse (100) selon la revendication 8 ou 9, dans laquelle la pluralité de parties creuses (133d-f) comprend une seconde partie creuse (133d,133e) qui est située entre la base de montage (114) et l'une ou les plusieurs parties de racloir (132a-c).

11. Lame de racloir de courroie transporteuse (100) selon l'une quelconque des revendications 8 à 10, dans laquelle des parties adjacentes de la pluralité de parties (133a-f) sont séparées l'une de l'autre par une structure de séparation (140a-e) qui raccorde mutuellement des parois opposées (116a, 116b) de la structure d'enveloppe de support (110).

12. Ensemble de racloir de courroie transporteuse (10) pour éliminer par raclage un matériau à partir d'une surface de courroie transporteuse (24), comprenant :
une pluralité de lames de racloir de courroie transporteuse (100) selon l'une quelconque des revendications 1 à 11, et
un arbre de support (26) structuré et agencé pour supporter ladite pluralité de lames de racloir de courroie transporteuse (15), et
des moyens de mise en tension (34) configurés pour exercer un couple ou une force sur l'arbre de support (26) pour presser la pluralité de lames de racloir de courroie transporteuse (100) vers la surface de courroie transporteuse (24).

13. Procédé de fabrication d'une lame de racloir de courroie transporteuse selon la revendication 1, ledit procédé comprenant les étapes suivantes :
a) la fabrication (S502) d'une structure d'enveloppe de support (110) faite d'un premier matériau ayant un bout de racloir (112) à une première extrémité (111) et d'une base de montage (114) à une seconde extrémité opposée (113) et effilée vers le bout de racloir (112) au moins à la première extrémité (111), et
b) l'agencement (S504) d'un ou de plusieurs éléments de racloir (100) faits d'un second matériau au-dedans de la structure d'enveloppe de support (110) afin de remplir au moins partiellement un intérieur de celle-ci à la première extrémité (112).

14. Procédé selon la revendication 13, dans lequel l'étape de la fabrication (S502) de la structure d'enveloppe de support (110) est accomplie par un processus d'extrusion, un processus de moulage par injection, ou un processus d'impression 3D.

15. Procédé selon la revendication 13 ou 14, dans lequel l'étape de l'agencement (S504) de l'un ou des plusieurs éléments de racloir (120a-c) au-dedans de la structure d'enveloppe de support (110) comprend :
l'alimentation en le second matériau, sous forme liquide, dans la structure d'enveloppe de support (110) afin de remplir au moins partiellement un intérieur de celle-ci à la première extrémité (112),
moyennant quoi le second matériau se lie au premier matériau de la structure d'enveloppe de support (110) pour former une structure cohérente durant le refroidissement.
